**Europäisches Patentamt**

**European Patent Office**

**Office européen des brevets**

(11) Veröffentlichungsnummer: **0 229 989**
A2

# (12) EUROPÄISCHE PATENTANMELDUNG

(21) Anmeldenummer: **86117338.3**

(22) Anmeldetag: **12.12.86**

(51) Int. Cl.⁴: **G 06 K 7/10,** B 07 C 3/14

(30) Priorität: **16.12.85 AT 3627/85**

(43) Veröffentlichungstag der Anmeldung: **29.07.87 Patentblatt 87/31**

(84) Benannte Vertragsstaaten: **AT BE CH DE FR GB IT LI LU NL SE**

(71) Anmelder: **Ing. Günter Knapp Ges.m.b.H. u. Co. KG, Günter-Knapp-Strasse 5-7, A-8042 Pachern bei Graz - St. Peter (AT)**

(72) Erfinder: **Pessenhofer, Walter, Weissenkircherstrasse 23, A-8020 Graz (AT)**

(74) Vertreter: **Kinzebach, Werner, Dr., Patentanwälte Reitstötter, Kinzebach & Partner Sternwartstrasse 4 Postfach 86 06 49, D-8000 München 86 (DE)**

(54) **Vorrichtung zum Erkennen von Codemarken.**

(57) Es wird eine Vorrichtung zum Erkennen der in einer bestimmten Anzahl von Schritten einstellbaren Relativpositionen mindestens zweier Codemarken zu einer festen dritten Codemarke gezeigt. Die Codemarken werden relativ zu einer Lesestation bewegt, die eine bestimmte Anzahl von Codelesern aufweist. Den Codelesern ist eine von einem Adreßzähler gesteuerte Multiplexeranordnung nachgeschaltet, welche die Codeleser nacheinander abfragt und die Ergebnisse seriell ausgibt. Der Ausgang der Multiplexeranordnung ist mit einer Zwischenspeichereinheit zum Speichern und Abgeben der einzelnen Ergebnisse verbunden. Der Ausgang der Zwischenspeichereinheit ist mit dem Eingang eines Priority-Encoders verbunden, an dessen Ausgang die binärcodierte Adresse des reihenfolgehöchsten Einganges liegt, an dem eine «1» anliegt. Die Ausgänge des Priority-Encoders sind auf zwei End-Zwischenspeicher geführt, deren Eingänge parallelgeschaltet sind. Es sind zwei Zell- und Speicherpulserzeugungsschaltungen vorgesehen, die mit dem Adreßzähler und den End-Zwischenspeichern derart verschaltet sind, daß dann, wenn der erste Codeleser nach Vorbeistreichen einer ersten Codemarke das Vorbeistreichen einer zweiten Codemarke erkennt, der erste End-Zwischenspeicher den Ausgangswert des Priority-Encoders übernimmt, und daß dann, wenn der letzte Codeleser nach Vorbeistreichen einer ersten Codemarke das Vorbeistreichen einer zweiten Codemarke erkennt, der zweite End-Zwischenspeicher den Ausgangswert des Priority-Encoders übernimmt.

Die Erfindung betrifft eine Vorrichtung zum Erkennen von Codemarken nach dem Oberbegriff des Hauptanspruchs.

Bei der Steuerung automatisiert ablaufender Förder- oder Sortiervorgänge besteht das Problem, daß einzelne Artikel, die auf sich verzweigenden Bahnen gefördert werden, bestimmte Abzweigungen nehmen müssen, andere Abzweigungen nicht nehmen dürfen. Die Steuerung der Bahnen bzw. Weichen an den Abzweigungen kann nun zentral erfolgen, indem man - mittels eines Computers - die Bahn eines einzelnen Behälters verfolgt und die jeweiligen Weichen entsprechend schaltet. Zu diesem Zweck muß aber eine Vielzahl von Steuerleitungen verlegt werden, so daß der Aufwand und auch die Störanfälligkeit der Gesamtanordnung unvertretbar hoch werden.

Es ist bekannt, die zu transportierenden Artikel mit Codemarken zu versehen, welche aufgrund ihrer Anordnung Informationen über einen bestimmten Weg enthalten. Hierfür sind die Codemarken in bestimmten Relativpositionen zueinander angeordnet, wobei diese Relativpositionen in Schritten einstellbar sind. Zum Lesen und darauffolgenden Steuern der Weiche eines jeden Verzweigungspunktes sind vor den Verzweigungspunkten Lesestationen angeordnet, welche eine bestimmte Anzahl von Codelesern aufweisen. Die Codeleser haben hierbei zueinander Abstände, welche den Einzelschritten zum Einstellen der Relativpositionen der Codemarken entsprechen. Bei dieser bekannten Vorrichtung sieht man für jede mögliche Position einer Codemarke einen gesonderten Codeleser vor. Da aber die Anzahl der Codeleser der Anzahl möglicher Positionen von Codemarken entsprechen muß, wird die Lesestation außerordentlich aufwendig. Darüber hinaus erfordert die Verschaltung der einzelnen Codeleser einen großen (Verdrahtungs-)Aufwand, was den Installationsaufwand weiter erhöht. Schließlich besteht bei den bekannten Vorrichtungen ein wesentliches Problem darin, daß alle Codeleser genau justiert bzw. (elektrisch) abgeglichen werden müssen, um ein einwandfreies Funktionieren zu gewährleisten. Erwähnt sei an dieser Stelle auch, daß derartige umfangreiche Lesestationen hohe Kosten verursachen.

Ausgehend vom oben genannten Stand der Technik ist es Aufgabe der vorliegenden Erfindung, eine Vorrichtung der eingangs genannten Art dahingehend weiterzubilden, daß mit geringerem Aufwand eine störunanfällige und effizientere Arbeitsweise möglich ist.

Diese Aufgabe wird erfindungsgemäß durch eine Vorrichtung gelöst, welche die im Patentanspruch 1 aufgeführten Merkmale aufweist.

Durch die erfindungsgemäße Anordnung ist es möglich, mit einer bestimmten Anzahl von Codelesern die doppelte Anzahl von Markenpositionen exakt zu erkennen, so daß allein durch die geringere Anzahl an Codelesern die Störanfälligkeit der Gesamtanordnung gegenüber herkömmlichen Anordnungen vermindert ist. Das Erkennungsergebnis wird in digitaler Form, also leicht mit den bekannten Mitteln verarbeitbar ausgegeben. Eine derartige "Grundstation" kann somit an beliebiger Stelle verwendet und nur hinsichtlich der Verwertung des Ausgangsergebnisses modifiziert eingesetzt werden, so daß eine kostengünstige Serienproduktion möglich ist. Weiterhin wird dadurch, daß die Codeleser über eine Multiplexeranordnung abgefragt werden, erreicht, daß eine einzige elektronische Schaltung zur Verarbeitung der Signale einer im wesentlichen beliebigen Anzahl von Codelesern ausreicht.

Bei einer bevorzugten Ausführungsform der Erfindung führt man die Schaltung derartig aus, daß nur dann, wenn sich zwei (und nur zwei) Codemarken im Bereich der Lesestation befinden, die Positionen dieser beiden Codemarken in die Endzwischenspeicher (zur späteren Verarbeitung) übernommen werden. Durch diese Maßnahme wird erreicht, daß dann, wenn der erste Codeleser beim Eintreffen der festen Codemarke ein Erkennungssignal abgibt, bevor die erste, vorlaufende (sich bereits innerhalb der Lesestation befindliche) Codemarke von einem der anderen Codeleser erkannt wird, nicht die Distanz "O" eingespeichert wird. Zu diesem Zeitpunkt gibt nämlich der erste Codeleser schon zum zweiten Mal ein Signal ab (= Bedingung zum Einspeichern), während die Distanz zur nächsthöheren Codemarke – die ja gar nicht erkannt wird – "O" ist. Diese Fehlfunktion wird in der bevorzugten Ausführungsform der Erfindung sicher vermieden. Darüber hinaus bietet diese besondere Ausführungsform ganz allgemein eine weitere Erhöhung der Störsicherheit, da ein einzelner, zufällig auftretender Fehlimpuls an einem Codeleser keine Folgen nach sich zieht.

Weitere vorteilhafte Ausführungsformen dieser bevorzugten Ausführungsform der Erfindung ergibt sich aus Anspruch 3.

Bei einer weiteren bevorzugten Ausführungsform der Erfindung wird die Arbeitsgeschwindigkeit der Multiplexeranordnung so hoch über der Bewegungsgeschwindigkeit der Codemarken gewählt, daß während des Vorbeistreichens der Codemarken an den Codelesern die Codeleser der gesamten Lesestation mehrmals abgefragt werden können und dabei das gleiche Resultat (im störungsfreien Zustand) entsteht. Das entstehende Resultat kann man z.B. mitteln, um so eine erhöhte Fehlerredundanz zu erzielen. Vorzugsweise wird aber die Anordnung derart gewählt, daß das erkannte Ergebnis nur dann übernommen wird, wenn eine bestimmte Anzahl von Lesevorgängen ohne Abweichung im Ergebnis erfolgte, d.h., eine Codemarke eine bestimmte Anzahl von Malen hintereinander (ohne Unterbrechung) als vorhanden erkannt wurde. Wird bei einem einzigen Abtastvorgang die betreffende Marke nicht erkannt, so beginnt der Zählvorgang wieder von neuem. Durch diese Art der Auswertung des Ergebnisses der Codemarkenerkennung wird eine weitere, ganz erhebliche Steigerung der Störsicherheit der Anordnung bewirkt. Bevorzugte Ausführungsformen einer solchen Schaltung ergeben sich aus den Ansprüchen 6 und 7.

Bei einer weiteren bevorzugten Ausführungsform der Erfindung ist in der Ausgangsleitung der Multiplexeranordnung eine Verzögerungsschaltung mit einer definierten Zeitkonstante angeordnet. Eine Überwachungsschaltung ist vorgesehen, die mit dem Ausgang der Verzögerungsschaltung und dem End-Zwischenspeicher derart geschaltet ist, daß die End-Zwischenspeicher dann wieder zurückgesetzt werden, wenn nach einer die Zeitkonstante übersteigenden Zeitspanne kein weiteres Signal am Ausgang der Verzögerungsschaltung erscheint. Beim ersten Datenpuls wird die Überwachungsschaltung gestartet und gibt während einer bestimmten Zeitspanne (z.B. ca. 400 msec) alle Speicher und Zähler der Schaltung frei. Tritt nun länger als die von der Verzögerungsschaltung bestimmte Zeit kein weiterer Datenpuls auf, so fällt die Überwachungsschaltung wieder zurück und sperrt alle Speicher und Zähler und setzt diese wieder zurück. Auf diese Weise wird vermieden, daß ein "wilder" Datenpuls (wie bei Verwendung von Lichtschranken z.B. durch Spiegelung, Fremdlichtsprünge etc.) einen bleibenden Speicherinhalt erzeugt, oder einen der Zähler weiterzählen läßt, was dann bei einer ordnungsgemäßen Lesung zu Fehlern führen würde. Darüber hinaus setzt diese Schaltung die Speicherpulserzeugungsschaltung nach dessen korrekter Funktion zurück. Eine bevorzugte Ausführungsform dieser Schaltung ist in Anspruch 9 beschrieben.

Einen weiteren Beitrag zur Erhöhung der Störsicherheit der erfindungsgemäßen Vorrichtung - und damit einen Beitrag zur Lösung der Aufgabe - liefert eine bevorzugte Ausführungsform der Erfindung, die sich dadurch auszeichnet, daß die Codeleser jeweils ein Sendeelement und ein dazugehöriges Empfangselement aufweisen, daß die Multiplexeranordnung zwei Multiplexer umfaßt, deren Adressleitungen parallelgeschaltet sind und deren Eingänge mit den Ausgängen der Empfangselemente verbunden sind, und zwar derart, daß beim seriellen Abfragen der Empfangselemente ein bestimmtes Empfangselement zuerst vom zweiten Multiplexer und nach einer durch eine Anzahl von Takten definierten Verzögerungzeit vom ersten Multiplexer, daß weiterhin ein Decoder vorgesehen ist, dessen Adress-Eingänge parallel zu denen der Multiplexer liegen und dessen Ausgänge in steuernder Verbindung mit den Sendeelementen stehen, wobei die Verschaltung derart getroffen ist, daß mit Abfragen der Empfangselemente vom ersten Multiplexer die dazu gehörigen Sendeelemente angesteuert werden. Weiterhin ist vorgesehen, daß dem zweiten Multiplexer eine Verzögerungsschaltung nachgeschaltet ist, deren Verzögerungzeit gleich der Verzögerungzeit zwischen den beiden Multiplexern ist, schließlich sind der Ausgang des ersten Multiplexers und der Ausgang der Verzögerungsschaltung derart auf eine Subtrahierschaltung geführt, daß am Ausgang der Subtrahierschaltung der Ausgangswert eines Empfangselements bei angesteuertem Sendeelement vermindert um den (um den Verzögerungszeitraum vorher gemessenen) Wert desselben Empfangselementes bei nicht-aktivem Sendeelement erscheint.

Durch diese besondere Ausführungsform der Erfindung wird gewährleistet, daß eine von außen kommende Störung (z.B. Fremdlicht bei der Verwendung von Lichtschranken) vom eigentlichen Meßergebnis subtrahiert wird, also kompensiert wird. Geht man davon aus - was in der Praxis in den meisten Fällen gegeben ist - daß die Änderung der Störgröße langsamer als die Abtastung der verschiedenen

Empfangselemente vor sich geht, so wird die Fehlerredundanz des Systems ganz erheblich gesteigert. Ein weiterer Vorteil der Anordnung liegt darin, daß die Sendeelemente nie gleichzeitig in Betrieb sind, sondern nur nacheinander gepulst betrieben werden. Auf diese Weise ist eine weitere Vereinfachung der Anordnung u.a. im Hinblick auf die notwendige Stromquelle zur Versorgung der Sendeelemente gegeben. Schließlich muß noch darauf hingewiesen werden, daß durch diese Anordnung eine Nullpunktseinstellung der Empfangselemente erfolgt, wenn keine von außen kommende Störung das Empfangselement erreicht.

Als Verzögerungsschaltung kann ein übliches Verzögerungsglied (Integrator) oder aber auch eine Kettenschaltung verwendet werden, welche eine exakte Zeitverschiebung ermöglicht.

Eine weitere Erhöhung der Störsicherheit bzw. Betriebssicherheit bei gleichzeitiger Verringerung des Herstellungsaufwandes ergibt sich dadurch, daß die Codeleser der Lesestation Reflexionslichtschranken mit Lichtsendern und Lichtempfängern umfassen, die übereinander, senkrecht zur Bewegungsrichtung der Codemarken angeordnet sind, daß im geringstmöglichen Abstand vor den Lichtsendern und Lichtempfängern Zylinderlinsen angeordnet sind, und daß in Bewegungsrichtung der Codemarken gesehen alle Zylinderlinsen der einzelnen Codeleser zur Bildung der Lesestation unmittelbar nebeneinander angeordnet sind. Durch diese Anordnung ist gewährleistet, daß die Lesestation mit den geringstmöglichen Ausmaßen gefertigt werden kann, so daß sich eine erhebliche Reduzierung an Material und Installationsraum erreichen läßt. Durch die Anordnung von Zylinderlinsen ist eine hohe Lichtausbeute gewährleistet, wobei vorteilhafterweise jeweils eine Zylinderlinse für zwei Elemente, nämlich einen Empfänger und einen Sender gleichzeitig verwendet wird. Auch hierdurch ergibt sich eine weitere Kostenreduzierung.

Weitere vorteilhafte Ausführungsformen der Erfindung ergeben sich aus den nachfolgenden Ausführungsbeispielen, die anhand von Abbildungen näher beschrieben werden. Hierbei zeigt:

Fig. 1    eine schematisierte Darstellung der Anordnung von Lesestation zu Codemarken,

Fig. 2    einen Behälter, auf den Codemarken aufgesteckt werden können,

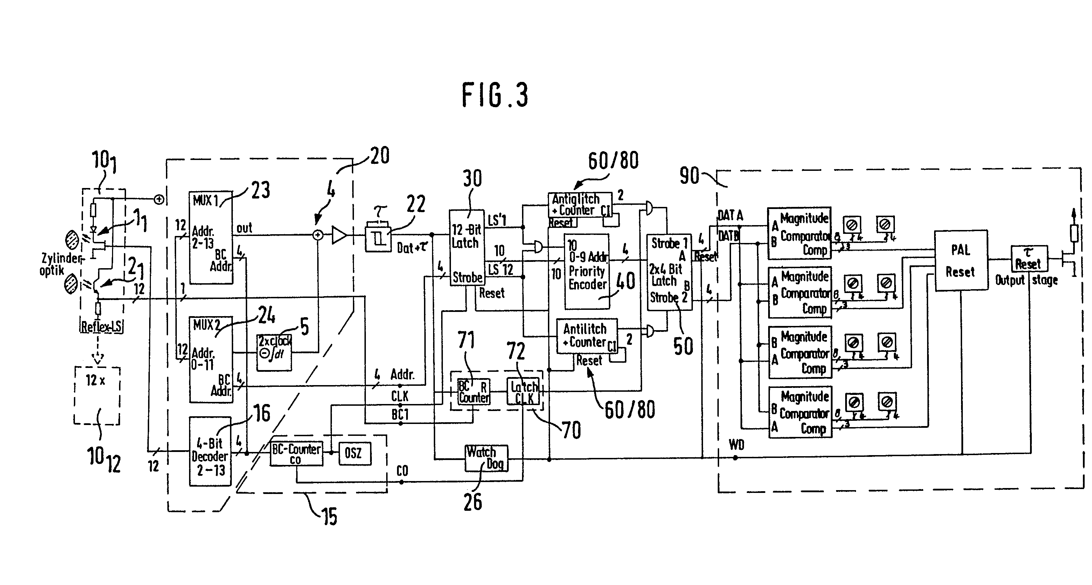

Fig. 3    eine Blockschaltbilddarstellung einer vollständigen Schaltungsanordnung zum Erkennen,

Fig. 4    ein Schaltbild des Eingangsteils der Anordnung nach Fig. 3,

Fig. 5    eine Schaltung des Speicherteils aus Fig. 3,

Fig. 6    eine Schaltung des Auswertteils aus Fig. 3,

Fig. 7    eine perspektivische Teildarstellung einer Lesestation, und

Fig. 8    einen Längsschnitt durch eine Lesestation.

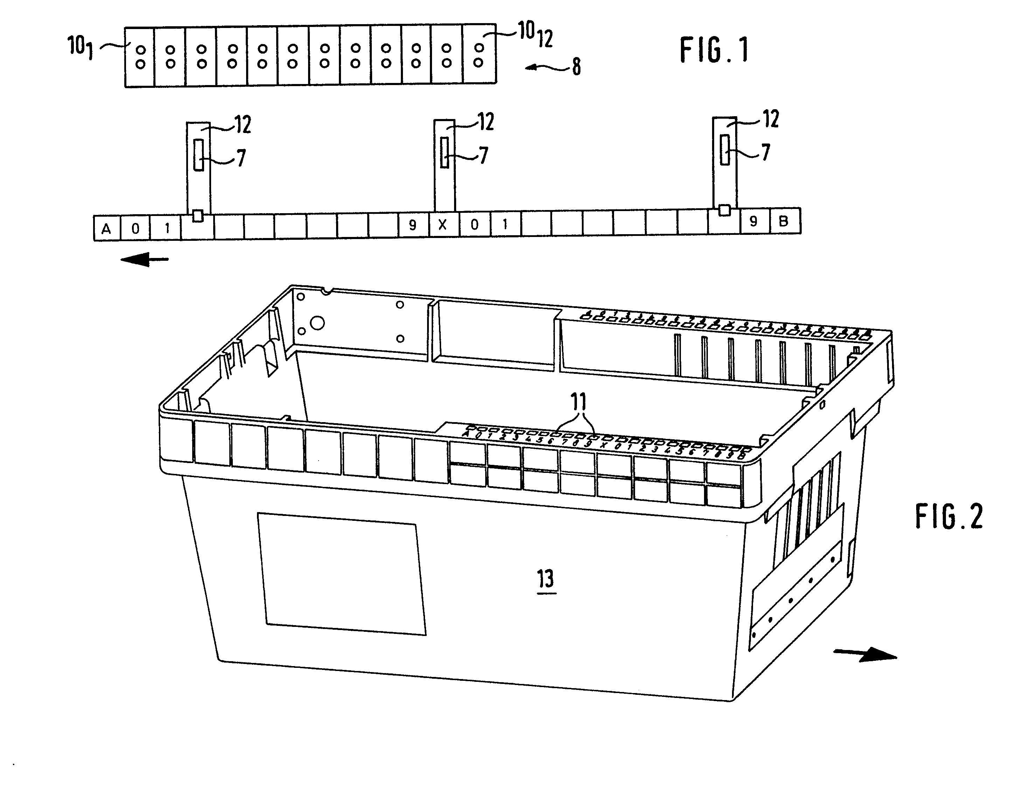

Im folgenden wird die Verwendung der erfindungsgemäßen Vorrichtung anhand der Fig. 1 und 2 näher erläutert.

Bei der Auslieferung von Bestellungen aus einem Großlager - z.B. bei Pharma-Großhändlern - wird ein (oder mehrere) Behälter 13 einer bestimmten Bestellung bzw. einem bestimmten Besteller (Apotheke) zugeordnet. Der Behälter soll auf den Förderanlagen, die mit Weichen ausgestattet sind, einen bestimmten Weg nehmen. Dieser Weg kann durch Codemarken 12 bestimmt werden, die am Behälter in Markenaufnahmen 11 eingesteckt werden können. Die mittlere der in Fig. 1 gezeigten Codemarken 12 wird immer in der gezeigten Position eingesteckt gelassen bzw. fest installiert. Die beiden anderen Codemarken können beliebig zwischen dèn Positionen O bis 9 und A bzw. B plaziert werden. Jede der Codemarken 12 weist hierbei ein Reflektorfeld 7 auf, das aus den bekannten Reflexionsfolien mit hoher Richtungsselektivität gefertigt wird.

Vor jeder Weiche des Transportweges (nicht gezeigt) ist eine Lesestation 8 angeordnet, in Fig. 1 ist diese Station der besseren Verständlichkeit halber über der Leiste mit Codemarken gezeigt. Die Codelesestation 8 weist insgesamt 12 Codeleser $10_1$ - $10_{12}$ auf, die neben-einander angeordnet sind, so daß die Codemarken 12 nacheinander an den einzelnen Codelesern $10_1$ - $10_{12}$ vor-beifahren. Die Fahrtrichtung des Behälters 13 ist in den Fig. 1 und 2 jeweils mit einem Pfeil angedeutet.

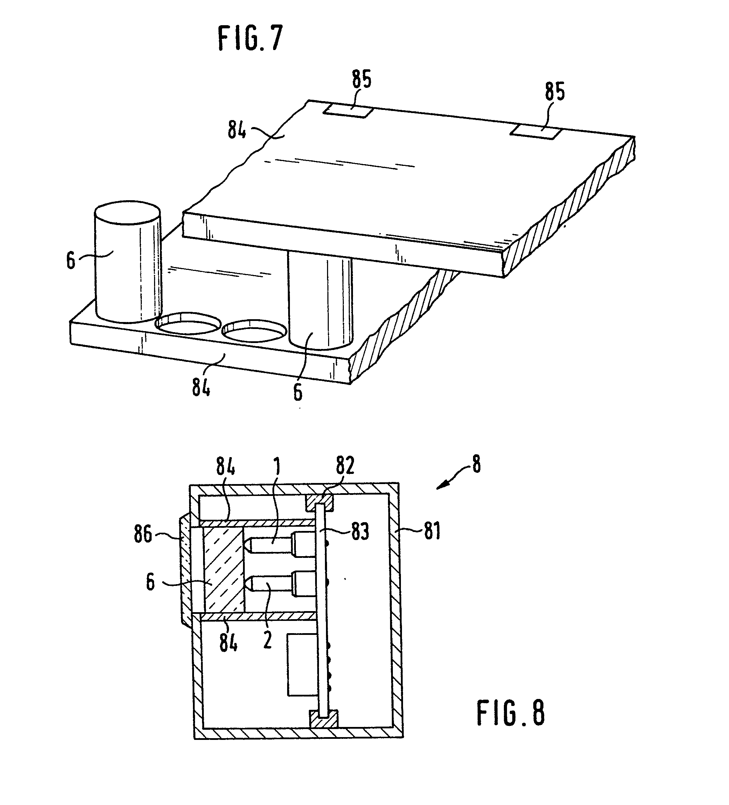

Im folgenden wird die hier erläuterte bevorzugte Ausführungsform der Erfindung anhand des Blockschaltbildes nach Fig. 8 näher beschrieben.

Wie aus Fig. 8 hervorgeht, umfaßt die Vorrichtung zunächst Codeleser 10 (in Fig. 1 nur einer gezeigt), die jeweils aus einem Sendeelement 1 (FET-gesteuerte LED) und einem Empfangselement 2 (Phototransistor) bestehen. Die Anordnung aus (hier insgesamt 12) Sende- und Empfangselementpaaren wird durch eine Multiplexeranordnung 20 angesteuert. Diese Multiplexeranordnung besteht aus einem ersten Multiplexer 23, einem zweiten Multiplexer 24 und einem Decoder 16, die alle mit ihren Adresseingängen mit den Ausgängen eines (BC-)Zählers 15 in Verbindung stehen. Die beiden Multiplexer und der Decoder werden vom Zähler 15 somit gleichzeitig durchgeschaltet.

Der erste Multiplexer 23 steht mit seinem Eingang Nr.2 mit dem ersten Empfangselement $(2_1)$ in Verbindung, mit dem auch gleichzeitig der zweite Multiplexer 24 in Verbindung steht, jedoch mit seinem Eingang Nr.0. Der Decoder 16 steht mit seinem Ausgang Nr.2 mit dem dazu gehörigen ersten Sendeelement $1_1$ in Verbindung. Die weiteren Sendeelemente $1_n$ bzw. Empfangselement $2_n$ stehen mit den entsprechenden Ausgängen der beiden Multiplexer 23/24 bzw. des Decoders 16 in Verbindung derart, daß der zweite Multiplexer 24 beim Durchtakten der Multiplexer bzw. des Decoders immer drei Taktzyklen vor dem ersten Multiplexer 23 bzw. dem Decoder 16 an den entsprechenden Codeleser $10_1$ bzw. dessen Empfangselement $2_1$ gekoppelt ist.

Der Ausgang des zweiten Multiplexers 24 ist auf eine Verzögerungsschaltung 5 geführt, welche das Ausgangssignal des Multiplexers 24 um denjenigen Betrag verschiebt, der sich durch die vorgenannten Unterschiede der Ausgangsleitung zwischen dem Multiplexer 23 und dem Multiplexer 24 ergibt. Das aus der Verzögerungsschaltung 5 gelangende (invertierte) Signal repräsentiert somit immer das Ausgangssignal desselben Empfangselementes $1_n$ wie das Ausgangssignal des ersten Multiplexers 23. Diese, aus demselben Empfangselement $1_1$ stammenden Signale werden in der Schaltung, die mit 4 bezeichnet ist, summiert, d.h. die Ausgangswerte aus den Empfangselementen $2_n$ werden - aufgrund der Zeichenumkehr in der Verzögerungsschaltung 5 - voneinander subtrahiert. Wie eingangs bereits erläutert wird auf diese Weise eine umweltbedingte Störung, z.B. Fremdlicht, ausgeschaltet. Somit verläßt eine störbereinigte Folge von Signalen die Multiplexerschaltung 20, welche die nacheinander "ausgelesenen" Werte der Codeleser $10_n$ repräsentiert. Diese Ausgangswerte werden in einer weiteren Verzögerungsschaltung 22 um einen Zeitwert $\tau$ verzögert und in einen Zwischenspeicher 30 eingespeichert. Der aktuelle Speicherzeitpunkt wird durch eine Verbindung zwischen dem Speicher 30 (Strobe-Eingang) und dem clock-Ausgang des Zählers 15 gesteuert. Durch die Verzögerungsschaltung 22 fällt der eigentliche Datenpuls somit immer sicher in das Speicherintervall.

Die Speicheradresse wird ebenfalls vom Zähler 15 (parallel zur Multiplexerschaltung 20) gesteuert. Weiterhin ist noch eine Überwachungsschaltung 26 vorgesehen, die mit dem Ausgang der Verzögerungsschaltung 22 in Verbindung steht und den Reset-Eingang des Speichers 30 immer dann betätigt bzw. den Speicher 30 zurücksetzt, wenn bestimmte, weiter unten näher beschriebene Bedingungen gegeben bzw. nicht gegeben sind.

Der Speicher 30 ist mit den Ausgangsleitungen LS1 und LS12, welche dem ersten Codeleser $10_1$ bzw. $10_{12}$ entsprechen, jeweils auf eine Schutzschaltung 80 geführt, welche jeweils eine Zähl- und Speicherpulserzeugungsschaltung 60 ansteuern. Beide Schaltungen werden weiter unten näher erläutert. Diese beiden Ausgänge des Speichers 30 sind weiterhin auf ein UND-Gatter geführt, dessen Ausgang auf den Eingang Nr.10 eines Priority-Encoders 40 geführt ist.

Die übrigen Ausgangsleitungen des Speichers 30 (LS2 - LS11) sind auf die Eingänge Nr.0 - 9 des Priority-Encoders 40 geführt.

Die (vier) Ausgänge des Priority-Encoders 40 sind auf die Eingänge eines End-Zwischenspeichers 50 geführt, der zwei Strobe-Eingänge entsprechend seiner internen Zweiteilung aufweist. Die Strobe-Eingänge führen auf die Ausgänge von UND-Gattern, deren Eingänge zum einen auf den Ausgängen der Zähl- und Speicherpulserzeugungsschaltungen 60, zum anderen auf dem Ausgang einer Codemarken-Anzahlerkennungsschaltung 70 liegt. Die Codemarken-Anzahlerkennungsschaltung 70 umfaßt einen Zähler 71 mit nachgeschaltetem Speicher (latch) 72, wobei der Speicher 72 mit dem Carry-Out(CO)-Signal des Zählers 15 angesteuert wird, während der Zähler 71 mit seinem Zähleingang auf dem Ausgang der Verzögerungsschaltung 22 und seinem Reset-Eingang auf dem Ausgang des ersten Empfangselementes $2_1$ liegt.

Die Ausgänge des End-Zwischenspeichers 50 liegen auf den Eingängen einer Vergleicherschaltung 90, in der die gelesenen Positionen der Codemarken mit voreingestellten Werten verglichen und dementsprechend Ausgangssignale - zur weichen Betätigung - erzeugt werden.

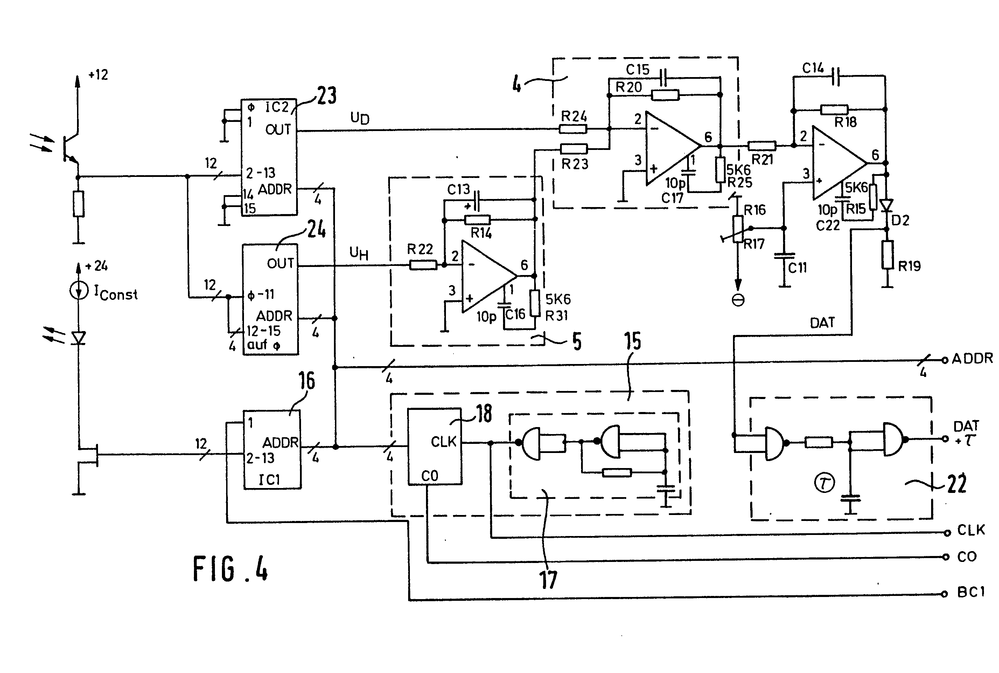

Im folgenden wird der Eingangsteil der Schaltung anhand von Fig. 4 näher erläutert. Hierbei wird auf die Anordnung der Multiplexer 23/24 sowie des Decoders 16 nicht nochmals näher eingegangen.

Die Verzögerungsschaltung 5 besteht aus einem Operationsverstärker, dessen positiver Eingang auf Masse liegt. Der Ausgang des Multiplexers 24 liegt über einen Widerstand $R_{22}$ auf dem invertierenden Eingang des Operationsverstärkers, der über einen Kondensator $C_{13}$ rückgekoppelt ist. Weiterhin ist im Rückkopplungszweig ein Widerstand $R_{14}$ vorgesehen, der die Maximalverstärkung der Verzögerungsschaltung 5 begrenzt.

Die Subtrahierschaltung 4 ist eigentlich als Summierschaltung ausgeführt, wirkt aber dadurch als Subtrahierschaltung, daß die Verzögerungsschaltung 5 ihr Eingangssignal invertiert. Die "Subtrahierschaltung" 4 ist als üblicher gegengekoppelter Invertierverstärker ausgeführt.

Der Subtrahierschaltung 4 nachgeordnet ist eine Verstärkerschaltung, welche den Pegel des Eingangssignales verschiebt und auf die nachgeordneten Digitalschaltungen anpaßt. Darüber hinaus ist diese der Subtrahierschaltung 4 nachgeordnete Schaltung mit einer Reihenschaltung aus Diode und Widerstand auf Masse gelegt, wobei der Verbindungspunkt zwischen Diode und Widerstand auf die Verzögerungsschaltung 22 geführt ist, die aus zwei in
Reihe geschalteten Digital-Invertierern besteht, zwischen denen ein Tiefpaß erster Ordnung angeordnet ist.

Der Adresszähler 15 besteht, wie in Fig. 4 dargestellt,
aus einem Oszillator 17, der von einem rückgekoppelten
und durch eine Kapazität bedämpftem Inverter mit nachfolgendem Puffer besteht. Der Oszillator 17 steuert
eine Zählschaltung 18 an, die im Binärcode zählt. Nach
jedem vollständigen Hochzählen der Zählschaltung 18
wird ein Carry-Out(CO)-Signal abgegeben.

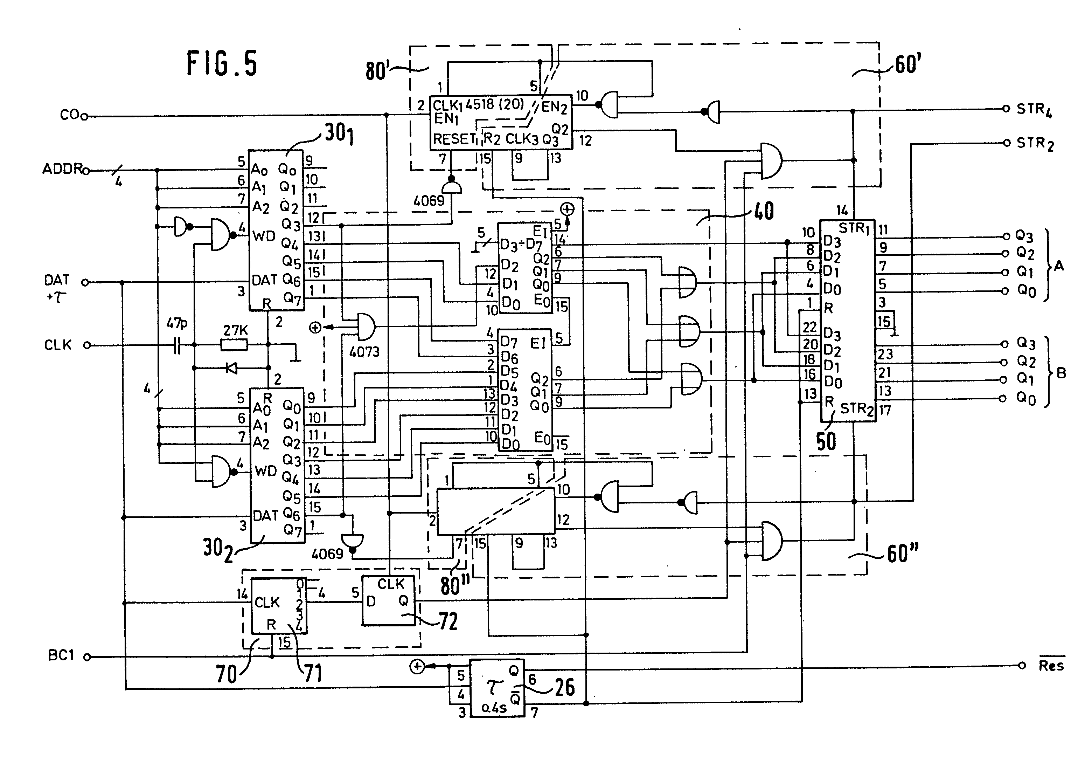

Im folgenden wird der Speicherteil der Schaltung anhand
von Fig. 5 näher erläutert.

Wie in Fig. 5 gezeigt, besteht der erste Speicher 30
aus zwei Speicherbausteinen $30_1$ und $30_2$, die zwölf
adressierbare Zwischenspeicher (für jeden Codeleser
einer) bilden. Die Adressleitungen sind parallel zu
denen der Multiplexer geführt. Da die Daten über die
Verzögerungsschaltung 22 zeitverschoben - und zwar um
einen halben Clock-Zyklus - einlaufen, fällt der kurze
Clock-Impuls, der den Einspeicherzeitpunkt definiert,
mitten ins Datenfenster. Andererseits liegen die Daten
aber nun um einen Adresswert höher im Zwischenspeicher.
Demzufolge werden die Ausgänge entsprechend fortgerückt
benützt, die Ausgänge beginnen daher bei $Q_3$.

Die zwei Schutzschaltungen 80' und 80" sind symmetrisch
angeordnet und gleich ausgebildet. Sie bestehen jeweils
aus einem Zähler, dessen Takteingang (hier der Enable-Eingang, da man Clock und Enable je nach benötigter Polarität der Taktflanken vertauschen kann) am CO des Adresszählers 15 liegen. Die Reset-Eingänge liegen an der Datenleitung. Weiterhin ist ein im wesentlichen frei wählbarer Zählerausgang $Q_n$ mit dem Clock-Eingang des Zählers verbunden. Zu bemerken ist hierbei, daß in Fig. 5 eine Schaltung gezeigt ist, bei welcher ein Baustein verwendet wird, der zwei Zähler beinhaltet.

Solange am Reset-Eingang niedriges Potential liegt - d.h. der entsprechende Codeleser empfängt kein Signal - ist der Zähler im Rücksetzzustand. Wird nun die Datenleitung, d.h. der Reset-Eingang, auf hohes Potential gelegt (vor dem entsprechenden Codeleser befindet sich eine Codemarke), so kann der nächste CO-Impuls den Zähler um einen Schritt weiterschalten. Der CO-Impuls tritt nach - wie oben erwähnt - beendetem vollständigem Abtastzyklus auf, d.h. alle Codeleser $10_1$ - $10_{12}$ wurden abgetastet. Der Zähler erreicht also nach n-Abtastzyklen den vorgewählten Zählwert n, bei dem der Ausgang $Q_n$ auf hohen Potential geht. Gibt nun aber während des Hochzählens der betreffende erste bzw. letzte Codeleser einmal kein Signal ab, so wird der Zähler 80' bzw. 80" zurückgesetzt und der Zählvorgang beginnt von neuem. Der Zähler kann daher seinen Endwert nur dann erreichen, wenn die Datenleitung mindestens n-Abtastzyklen unterbrechungsfrei auf hohem Potential bleibt. Jegliches "Prellen" wird so ausgeschaltet.

Der vorgewählte Ausgang $Q_n$ des Zählers 80' bzw. 80" ist mit dem Clock-Eingang des jeweiligen Zählers verbunden. Dadurch wird der Zählerstand n so lange (nach Erreichen) gehalten, bis die Datenleitung wieder niedriges Potential annimmt.

Im folgenden werden Aufbau und Funktion der Zähl- und Speicherpulserzeugungsschaltung 60 näher erläutert. Hierzu muß bedacht werden, daß drei Codemarken vorgesehen sind, die jeweils zueinander (bzw. zwei Codemarken zur mittleren) bis zu elf Plätze voneinander entfernt positioniert sein können. Da die Lesestation 8 aber nur zwölf Codeleser 10 aufweist, müssen die beiden Entfernungen bzw. Positionsdifferenzen zwischen den drei Codemarken unabhängig voneinander abgetastet und abgespeichert werden.

Um die beiden Distanzen voneinander zu unterscheiden, zählen zwei Zähler in den Schaltungen 60', 60" jeweils nur die Hellphasen der in Fahrtrichtung ersten bzw. letzten Codeleser $10_1$ bzw. $10_{12}$ mit. Befindet sich nun beim ersten Codeleser $10_1$ zum <u>zweiten</u> Mal eine Marke bzw. tritt am Ausgang dieses Codelesers zum zweiten Mal ein Ausgangssignal auf, so zählt der Zähler in der Schaltung 60' auf 2. In diesem Fall befinden sich genau zwei Codemarken vor der Lesestation 8. Um evtl. Störungen auszuschalten ist hier noch eine Codemarken-Anzeichenerkennungsschaltung 70 vorgesehen, die weiter unten näher beschrieben wird. Unter den vorgenannngen Bedingungen muß es sich um die in Fahrtrichtung des Behälters 13 gesehen erste Distanz zwischen den Codemarken handeln.

Tritt am Ausgang des letzten Codelesers $10_{12}$ zum zweiten Mal ein Signal auf, so muß die erste Codemarke schon die Lesestation 8 verlassen haben. Befinden sich somit nur zwei Codemarken vor der Lesestation 8 (s. unten erklärte Schaltung 70), so muß es sich um die zweite Distanz zwischen den Codemarken handeln.

In beiden vorgenannten Fällen tritt am Ausgang $Q_2$ des Zählers der Schaltungen 60' bzw. 60" ein hohes Potential auf, aus dem mit weiter unten erläuterten weiteren Bedingungen der Einspeicherpuls für die entsprechende Codemarkendistanz abgeleitet wird.

Die erste dieser weiteren Bedingungen ist, daß sich nur zwei Codemarken vor der Lesestation 8 befinden. Die zweite Zusatzbedingung, die vorliegen muß, damit im Speicher 50 gespeichert wird, ist das Vorhandensein des BC1-Impulses des Adresszählers 15. Da die in der Schaltung 70 festgestellte Bedingung mit dem CO-Impuls übernommen wird, ist der BC1-Impuls hinreichend spät.

Zugleich mit dem Einspeicherimpuls für den Speicher 50 wird aber über Gatterschaltungen in der Schaltung 60' bzw. 60" ein weiterer Zählimpuls dem Zählereingang der Schaltung 60' bzw. 60" zugeführt, wodurch der Zähler weiterzählt und sein Ausgang $Q_3$ auf hohes Potential kommt. Dieser Ausgang ist aber mit dem Clock-Eingang des Zählers verbunden, so daß der Zählerinhalt festgehalten wird, bis der Zähler über den Reset-Eingang wieder zurückgesetzt wird. Dieses Zurücksetzen geschieht durch den Ausgangsimpuls der weiter unten näher beschriebenen Schutzschaltung 26.

Durch die oben genannte Verknüpfung kann nur ein einziger Speicherimpuls auftreten.

Die vorgenannte Beschriebung gilt für den Fall, daß für die Schaltungen 60 und 80 zwei getrennte Johnson-Zähler verwendet werden. Bei der in Fig. 5 dargestellten Schaltung werden - wie bereits ausgeführt - Bausteine verwendet, die jeweils zwei Binärzähler beinhalten. Es treten daher zwei unmittelbar hintereinanderliegende Speicherimpulse auf, da ja beim Binärzähler der zweite Ausgang $Q_2$ beim Zählerstand 3 auch auf hohem Potential liegt und der dritte Ausgang $Q_3$ erst beim Zählerstand 4 auf hohes Potential kommt. Dies ändert aber nichts an der korrekten Funktion der Anordnung.

Die oben erwähnte Bedingung, daß sich zwei Codemarken vor der Lesestation 8 befinden, ist notwendig, um mechanische Toleranzen auszuschalten. Wird z.B. vom ersten Codeleser $10_1$ die mittlere Codemarke erkannt (es befindet sich zum zweiten Mal eine Codemarke vor dem Codeleser), bevor sich die erste Codemarke in einer korrekten erkennbaren Position vor dem betreffenden Codeleser $10_n$ befindet, so würde die Distanz "0" eingespeichert werden. Diese Fehlinterpretation wird durch die Schaltung 70 verhindert.

Die Schaltung 70 weist einen Zähler 71 auf, der die Anzahl von Erkennungssignalen innerhalb eines einzigen Abtastzyklus zählt. Nach jedem Abtastzyklus - nachdem also alle Codeleser $10_1$ - $10_{12}$ einmal abgetastet wurden - wird der Zähler 71 wieder zurückgesetzt. Vor diesem Zurücksetzen wird der Zählerinhalt dann, wenn der Zähler auf 2 gezählt hat, in einem D-Latch 72 gespeichert. Als Speicherpuls dient das CO-Signal. Um Speicherpuls und Reset-Impuls aber zeitlich zu trennen, wird die Schaltung 70 erst mit dem Ausgangsimpuls BC1 des Adresszählers 15 zurückgesetzt. Auf diese Weise liegen der Zurücksetzvorgang und der Speichervorgang um zwei Taktzyklen auseinander.

Am Ausgang Q des D-Latch's liegt nur dann ein hohes Potential, wenn die Schaltung 70 am Ende eines Abtastzyklus auf 2 gezählt hat.

Im folgenden wird die Funktion der Überwachungsschaltung 26 näher erläutert. Hierbei handelt es sich um ein wiedertriggerbares Monoflop mit einer Zeitkonstante $\tau$ das durch die Datenleitung getriggert wird.

Beim ersten Datenpuls wird das Monoflop 26 für die Zeit- spanne $\tau$ (ca. 400 msec) getriggert und gibt alle Speicher und Zähler der Schaltung frei. Tritt nun über eine Zeit- spanne länger als $\tau$ kein weiterer Datenpuls auf, so fällt das Monoflop 26 zurück und setzt somit alle Speicher und Zähler ebenfalls wieder zurück. Auf diese Weise wird vermieden, daß ein "wilder" Datenpuls (z.B. durch Spiegelung, Fremdlichtsprünge etc.) einen bleibenden Speicherinhalt erzeugt oder daß ein Zähler weiterzählt, was dann bei der regulären Abtastung zu Fehlern führen würde.

Außerdem werden durch die Schaltung 26 die Zähl- und Speicherpulserzeugungsschaltungen 60', 60" nach deren korrekter Funktion zurückgesetzt.

Im folgenden wird die Funktion des Priority-Encoders 40 näher erläutert.

Ein Priority-Encoder liefert bekanntlichermaßen am Ausgang die binärcodierte Adresse des höchstwertigen Einganges, an dem eine "1" liegt. Gemäß der in Fig. 5 gezeigten bevorzugten Ausführungsform der Erfindung werden zwei derartige Schaltungen verwendet, so daß bis zu 16 Eingänge in eine 4-Bit-Ausgangsadresse codiert werden können.

Die Eingänge liegen der Reihe nach auf den Ausgängen der Speicher $30_1/30_2$, wobei der erste und der letzte Speicherausgang (entsprechend dem ersten $C_1$ bzw. letzten Codeleser $C_{12}$) über ein UND-Gatter, verknüpft am Eingang "10" des Priority-Encoders 40 liegen. Dann, wenn auf der Position A (s. Fig. 1) oder B eine Codemarke positioniert ist, so beträgt die Distanz zur festen (mittleren) Codemarke elf Zwischenräume, d.h. der erste Codeleser $10_1$ und der letzte Codeleser $10_{12}$ empfangen gleichzeitig ein Signal.

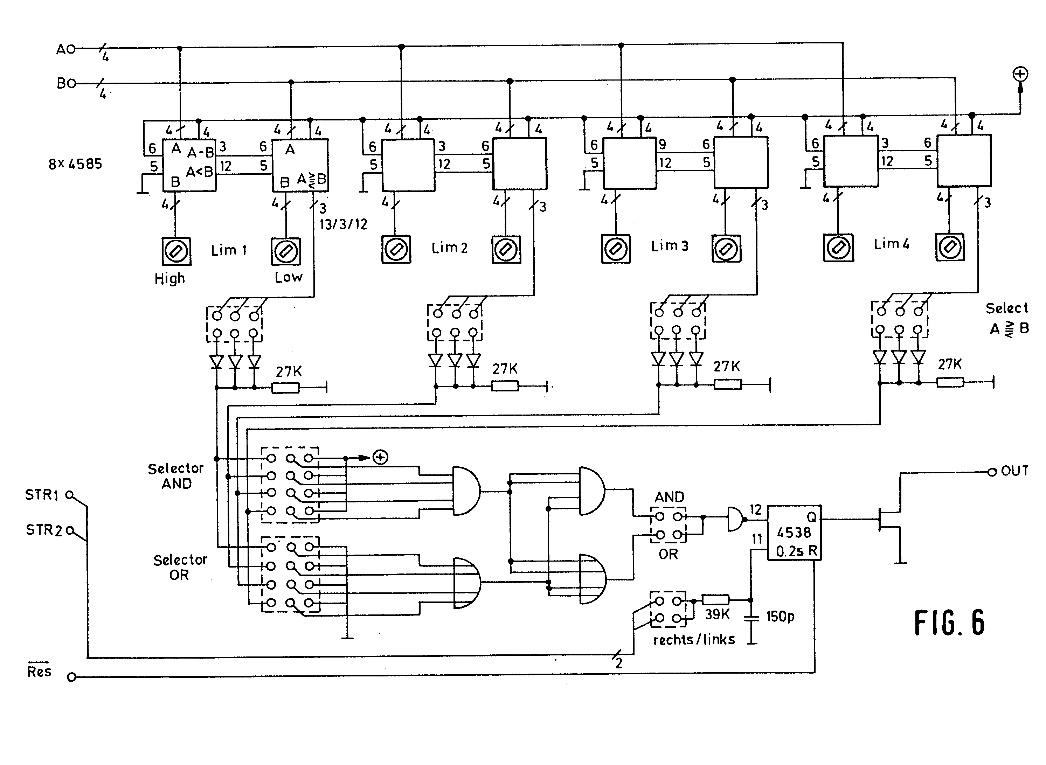

In Fig. 6 ist der Vollständigkeit halber das Schaltbild einer Auswertschaltung aufgezeigt. Eine nähere Erläuterung ist nicht notwendig, da sich die Funktion der Schaltung für den Fachmann aufgrund seines Fachwissens und der in Fig. 6 angegebenen Bezeichnung der Bauteile von selbst ergibt.

Im folgenden wird anhand der Fig. 7 und 8 der mechanische Aufbau einer bevorzugten Ausführungsform einer Lesestation 8 näher erläutert. Wie aus der Schnittzeichnung (Fig. 8) hervorgeht, umfaßt die Lesestation 8 ein Gehäuse 81, in dem über Schienen 82 eine Platine 83 gelagert ist. Auf der Platine 83 sind jeweils übereinander angeordnet die Paare von Leuchtdioden 1 bzw. Phototransistoren 2 aufgelötet. Weiterhin befinden sich vor den Leuchtdioden 1 bzw. Phototransistoren 2 Zylinderlinsen 6, die in Halteplatten 84 an ihren planen Enden gehalten sind. Die Halteplatten 84 sind aus kaschierten Platinen hergestellt, und zwar derart, daß Leiterbahnfelder 85 nicht abgeätzt sind. Mit diesen Feldern 85 sind die Halteplatten 84 an der Platine 83 festgelötet. Vor den Zylinderlinsen 6 befindet sich ein Fenster 86, das die Anordnung vor Verschmutzung schützt.

Wie aus der Beschreibung und den Fig. 7 und 8 hervorgeht, ist auf diese Weise ein besonders kompakter Aufbau erzielbar, der dennoch kostengünstig ist. Durch diesen kompakten Aufbau wird die Handhabbarkeit der Anordnung z.B. beim Anbringen an der dafür vorgesehenen Stelle erleichtert. Weiterhin wird durch die Anordnung der Zylinderlinsen und deren linienförmige Lichtbrechung eine erhöhte Störsicherheit beim Ablesen von Codemarken bzw. Refklektorfeldern 7 erzielt, da Höhenschwankungen keine wesentlichen Störungen verursachen.

---

Patentansprüche

1. Vorrichtung zum Erkennen der in einer bestimmten Anzahl von Schritten einstellbaren Relativpositionen mindestens zweier Codemarken zu einer festen dritten Codemarke, wobei die Codemarken relativ zu einer Lesestation bewegt werden und die Lesestation eine bestimmte Anzahl von Codelesern aufweist, deren Abstände zueinander den Einzelschritten zum Einstellen der Relativpositionen entsprechen,

g e k e n n z e i c h n e t   durch folgende Merkmale:

a) den Codelesern ($10_1$ - $10_n$) ist eine von einem Adresszähler (15) gesteuerte Multiplexeranordnung (20) nachgeschaltet, welche die Codeleser ($10_1$ - $10_n$) nacheinander abfragt und die Ergebnisse seriell ausgibt;

b) der Ausgang der Multiplexeranordnung (20) ist mit einer Zwischenspeichereinheit (30) zum Speichern und Abgeben der Einzelergebnisse verbunden;

c) der Ausgang der Zwischenspeichereinheit (30) ist mit dem Eingang eines Priority-Encoders (40) verbunden, an dessen Ausgang die binärcodierte Adresse des reihenfolgehöchsten Einganges liegt, an dem eine "1" anliegt;

d) die Ausgänge des Priority-Encoders (40) sind auf zwei End-Zwischenspeicher (50', 50") geführt, deren Eingänge parallelgeschaltet sind;

e) es sind zwei Zähl- und Speicherpulserzeugungsschaltungen (60', 60") vorgesehen, die mit dem Adresszähler (15) und den Endzwischenspeichern (50', 50")
derart verschaltet sind, daß dann, wenn der erste
Codeleser ($10_1$) nach Vorbeistreichen einer ersten
Codemarke (12) das Vorbeistreichen einer zweiten
Codemarke (12) erkennt, der erste Endzwischenspeicher (50') den Ausgangswert des Priority-Encoders
(40) übernimmt und daß dann, wenn der letzte Codeleser ($10_n$) nach Vorbeistreichen einer ersten
Codemarke (12) das Vorbeistreichen einer zweiten
Codemarke (12) erkennt, der zweite Endzwischenspeicher (50") den Ausgangswert des Priority-
Encoders (40) übernimmt.

2. Vorrichtung nach Anspruch 1, g e k e n n z e i c h -
n e t durch eine Codemarken-Anzahlerkennungsschaltung (70), die derart angeordnet ist, daß nur dann,
wenn sich zwei Codemarken im Bereich der Lesestation
befinden, ein Ausgangssignal abgegeben wird, wobei
der Ausgang der Codemarken-Anzahlerkennungsschaltung
(70) mit den Speicherpulserzeugungsschaltungen (60',
60") bzw. deren Ausgängen über UND-Gatter verknüpft
ist.

3. Vorrichtung nach Anspruch 2, d a d u r c h  g e -
k e n n z e i c h n e t , daß die Codemarken-Anzahlerkennungsschaltung (70) einen Zähler (71) und einen
Zwischenspeicher (D-Latch 72) umfaßt, die derart miteinander sowie mit dem Ausgang der Multiplexeranordnung (20) und dem Adressenzähler (15) verbunden sind,
daß der Zähler (71) die Schaltübergänge eines (einzigen) Abtastzyklus' zählt und an dessen Ende zurückgesetzt wird, und daß der Zählerzustand "2" im Zwischenspeicher (72) zwischengespeichert und auf das UND-Gatter geführt wird, und vorzugsweise daß der Reset-Eingang des Zählers (71) auf dem Reihenfolge-zweiten Ausgang (BC1) des Adresssenzählers (15) liegt.

4. Vorrichtung nach einem der vorhergehenden Ansprüche, d a d u r c h   g e k e n n z e i c h n e t , daß der Reihenfolge-zweite Ausgang (BC1) des Adressenzählers (15) ebenfalls auf die UND-Gatter geführt ist.

5. Vorrichtung nach einem der vorhergehenden Ansprüche, d a d u r c h   g e k e n n z e i c h n e t , daß der Adressenzähler (15) derart ausgebildet ist, daß die Multiplexeranordnung (20) jeden Codelser ($10_1$ - $10_n$) mehrmals abfragen kann, während die jeweilige Codemarke (12) am jeweiligen Codeleser ($10_1$ - $10_n$) vorbeistreicht.

6. Vorrichtung nach Anspruch 5, d a d u r c h   g e - k e n n z e i c h n e t , daß eine Schutzschaltung (80', 80") vorgesehen ist, die derart ausgebildet und mit dem ersten ($10_1$) bzw. dem letzten ($10_n$) der Code-leser bzw. dem entsprechenden Ausgang des Zwischenspeichers (30) sowie mit dem Adressenzähler (15) verbunden ist, daß nur dann, wenn über eine in der Schutzschaltung (80', 80") festgelegte Anzahl von Codelese-Abfragzyklen der erste ($10_1$) bzw. letzte ($10_n$) Codeleser ununterbrochen eine Codemarke (12) erkannt hat, ein Ausgangssignal gegeben wird, das die Zähl- und Speicherpulserzeugungsschaltungen (60) freigibt.

7. Vorrichtung nach Anspruch 6, d a d u r c h   g e - k e n n z e i c h n e t , daß die Schutzschaltung

zwei Zähler (80', 80") umfaßt, die vom Adressenzähler (15) bei jedem Abtastzyklus vorzugsweise mit dessen Carry-Out-Signal gesteuert hochzählen und die mit einem "0"-Signal an dem zum ersten ($10_1$) bzw. letzten ($10_n$) gehörenden Codeleser-Ausgang des Zwischenspeichers (30) zurückgesetzt werden, wobei die Zähler (80', 80") derart verschaltet sind ($Q_N$ auf Clock bzw. Enable), daß bei Erreichen der festgelegten Anzahl bzw. des entsprechenden Zählerstandes (N) der Zähler (80' bzw. 80") in seinem Zustand bis zum nächsten Rücksetzpuls gesperrt wird.

8. Vorrichtung nach einem der vorhergehenden Ansprüche, d a d u r c h   g e k e n n z e i c h n e t , daß in der Ausgangsleitung der Multiplexeranordnung (20) eine Verzögerungsschaltung (22) mit einer definierten Zeitkonstante ($\tau$) angeordnet ist, und daß eine Überwachungsschaltung (26) vorgesehen ist, die mit dem Ausgang der Verzögerungsschaltung (22) und den End-Zwischenspeichern (50', 50") derart verschaltet ist, daß die End-Zwischenspeicher dann (wieder) zurückgesetzt werden, wenn nach einer die Zeitkonstante ($\tau$) übersteigenden Zeitspanne kein weiteres Signal am Ausgang der Verzögerungsschaltung (22) erscheint.

9. Vorrichtung nach Anspruch 8, d a d u r c h   g e - k e n n z e i c h n e t , daß die Überwachungsschaltung ein wiedertriggerbares Monoflop (26) umfaßt.

10. Vorrichtung nach einem der vorhergehenden Ansprüche, d a d u r c h   g e k e n n z e i c h n e t , daß die Codeleser ($10_1$ - $10_n$) jeweils ein Sendeelement ($1_1$ - $1_n$) und ein dazugehöriges Empfangselement ($2_1$ -

$2_n$) aufweisen, daß die Multiplexeranordnung (20) zwei Multiplexer (23, 24) umfaßt, deren Adressleitungen parallel geschaltet sind und deren Eingänge mit den Ausgängen der Empfangselemente ($1_1$ - $1_n$) verbunden sind, und zwar derart, daß beim seriellen Abfragen der Empfangselemente ($1_1$ - $1_n$) ein bestimm-tes Empfangselement ($1_i$) zuerst vom zweiten Multi-plexer (24) und nach einer durch eine Anzahl von Takten definierten Verzögerungszeit ($\tau$) vom ersten Multiplexer (23), daß ein Decoder (16) vorgesehen ist, dessen Adress-Eingänge parallel zu denen der Multiplexer (23, 24) liegen, und dessen Ausgänge in steuernder Verbindung mit den Sendelementen ($2_1$ - $2_n$) stehen, wobei die Verschaltung derart getroffen ist, daß mit Abfragen der Empfangselemente ($1_1$ - $1_n$) vom ersten Multiplexer (23) die dazu gehörigen Sende-elemente ($2_1$ - $2_n$) angesteuert werden, daß dem zweiten Multiplexer (24) eine Verzögerungsschaltung (5) nachgeschaltet ist, deren Verzögerungszeit gleich der Verzögerungszeit ($\tau$) zwischen den beiden Multiplexern (23, 24) ist, und daß der Ausgang des ersten Multiplexers (23) und der Ausgang der Verzögerungsschaltung (5) derart auf eine Subtrahierschaltung (4) geführt sind, daß am Ausgang der Subtrahierschaltung (5) der Ausgangswert eines Empfangselements ($1_i$) bei angesteuertem Sendeelement ($2_i$) vermindert um den (um den Zeitraum $\tau$ vorher gemessenen) Wert desselben Empfangselementes ($1_i$) bei nicht aktivier-tem Sendeelement ($2_i$) erscheint.

11. Vorrichtung nach einem der vorhergehenden Ansprüche, d a d u r c h   g e k e n n z e i c h n e t ,   daß die Codeleser (10) der Lesestation (8) Reflexions-

lichtschranken mit Lichtsendern ($2_1 - 2_n$) und Licht-empfängern ($1_1 - 1_n$) umfassen, die übereinander (senkrecht zur Bewegungsrichtung der Codemarken (12)) angeordnet sind, daß im geringstmöglichen Abstand vor den Lichtsendern und Empfängern Zylinderlinsen (6) angeordnet sind und daß in Bewegungsrichtung der Codemarken (12) gesehen alle Zylinderlinsen (6) der Codeleser (10) zur Bildung der Lesestation (8) unmittelbar nebeneinander angeordnet sind.

---

0229989

FIG.1

FIG.2

FIG.3

FIG. 4

3/6

0229989

FIG.5

FIG. 6

0229989

5/6

FIG.7

FIG.8